# EUROPEAN PATENT APPLICATION

(11) **EP 1 919 160 A1**
(43) Date of publication of application: **07.05.2008**
(21) Application number: 07021586.8
(22) Date of filing: 06.11.2007
(51) Int. Cl.: H04L 29/06, H04Q 7/38

(54) **Method and apparatus for session negotiation in a mobile communication system**

(30) Priority: 06.11.2006 KR 20060109179; 31.07.2007 KR 20070076987
(71) Applicant: Samsung Electronics Co., Ltd., Suwon-si, Gyeonggi-Do (KR)
(72) Inventor: Kim, Soeng-Hun, Suwon-si Gyeonggi-do (KR); Jeong, Kyeong-In, Suwon-si Gyeonggi-do (KR); Song, O-Sok, Suwon-si Gyeonggi-do (KR); Van Lieshout, Gert Jan, Staines, Middlesex TW18 4QE (GB); Van der Velde, Himke, Staines, Middlesex TW18 4QE (GB)
(74) Representative: Lang, Johannes

(57) **Abstract**

Disclosed is an apparatus and a method for allocating persistent resources in order to support a packet service in a mobile communication system. The method includes acquiring scheduling information including an allocation period of a persistent resource corresponding to a predetermined packet state in a process of call setup between the communication apparatus and the Node B; receiving an allocation period and a size of a persistent resource to be allocated based on the packet state; and receiving a packet through the allocated persistent resource.

## Description

### BACKGROUND OF THE INVENTION

### 1. Field of the Invention

The present invention relates to an apparatus and a method for providing an efficient packet service, and more particularly to an apparatus and a method for allocating transmission resources in order to support an efficient packet service through Internet Protocols.

### 2. Description of the Related Art

A Universal Mobile Telecommunication Service (UMTS) system is a 3^{rd} generation (3G) asynchronous mobile communication system, which uses wideband Code Division Multiple Access (CDMA) based on Global System for Mobile communications (GSM) and General Packet Radio Services (GPRS), which are European mobile communication systems.

In the third generation Partnership Project (3GPP), which is in charge of the standardization of the 3G communication system based on the UMTS, standardization of the evolved mobile communication systems is progressing in order to provide various services. Active discussion involves a Long Term Evolution (LTE) system, which is one of the evolved mobile communication systems.

The LTE system is targeting commercialization thereof by the year 2010. Although it is not completely determined yet, the LTE system is expected to support a high speed packet service at a data rate of maximum 100 Mbps. Further, various communication techniques have been proposed for the LTE system, which include, for example, schemes of simplifying a structure of a higher layer network, such as a scheme of reducing the number of nodes located in communication paths, or a scheme of configuring a higher layer network as wireless channels using wireless protocols as much as possible.

Further, a Voice over Internet Protocol (VoIP) service, which provides a voice service based on an Internet Protocol, is a basic packet service expected to be widely used in the LTE system. The VoIP service is one example of a real time packet service, and the present invention can be applied to voice services proposed in other evolved communication systems. The VoIP service has a characteristic in that the voice packet is periodically generated.

In regard to this point, allocation of persistent resources is being discussed in the LTE system. This is because the allocation of persistent resources can reduce signaling overhead between system nodes. The current mobile communication systems do not allocate.

### SUMMARY OF THE INVENTION

Accordingly, the present invention has been made to solve at least the above-mentioned problems occurring in the prior art, and the present invention provides an apparatus and a method for allocating persistent resources in order to support a packet service in a mobile communication system.

Also, the present invention provides an apparatus and a method for allocating persistent resources with changeable allocation periods for packets occurring at a predetermined period in a mobile communication system.

Also, the present invention provides an apparatus and a method for acquiring different resource allocation intervals in accordance with changed states of packets, and automatically retransmitting packets through persistent resources determined by using the intervals.

Also, the present invention provides an apparatus and a method for allocating persistent resources corresponding to different resource allocation periods corresponding to changed states of packets in a mobile communication system.

In accordance with an aspect of the present invention, there is provided a method for receiving a persistent resource allocated from a Node B by a communication apparatus in a mobile communication system supporting a packet service, the method includes acquiring scheduling information including an allocation period of a persistent resource corresponding to a predetermined packet state in a process of a call setup between the communication apparatus and the Node B; receiving an allocation period and a size of a persistent resource to be allocated based on the packet state; and receiving a packet through the allocated persistent resource.

In accordance with another aspect of the present invention, there is provided a method for receiving a persistent resource allocated from a Node B by a communication apparatus in a mobile communication system supporting a packet service, the method includes acquiring scheduling information including allocation period determination information of a persistent resource corresponding to a predetermined packet state in a process of a call setup between the communication apparatus and the Node B; receiving the allocated persistent resource through a control channel; acquiring the allocation period determination information from the allocated persistent resource and identifying the resource allocation period from the acquired allocation period determination information; and receiving a packet through the persistent resource allocated by using the resource allocation period.

In accordance with another aspect of the present invention, there is provided a method for receiving a persistent resource allocated from a Node B by a communication apparatus in a mobile communication system supporting a packet service, the method includes receiving a control channel, which includes an identifier for identifying a predetermined persistent resource and an allocated persistent resource area and an allocation pattern corresponding to the identifier; receiving the control channel at a predetermined period; and identifying a changed persistent resource by identifying the identifier in the received control channel, and managing the persistent resource in a database.

In accordance with another aspect of the present invention, there is provided a scheduling apparatus of a Node B allocating a persistent resource in a mobile communication system, the scheduling apparatus includes a determiner for identifying a state and a state transition of a packet by identifying a size of the packet received from a higher layer node; and a scheduler for determining and notifying a transmission resource with a different size corresponding to the identified state of the packet and a resource allocation period corresponding to the transmission resource.

In accordance with another aspect of the present invention, there is provided a communication apparatus for receiving an allocated persistent resource in a mobile communication system, the communication apparatus includes a channel processor for receiving a control channel and acquiring a resource allocation period having a variable length corresponding to a size of a predetermined packet from the control channel; a calculator for calculating a resource allocation start point based on the acquired resource allocation period; and a receiver for receiving a packet transmitted through a persistent resource at a resource allocation period from the resource allocation start point.

### BRIEF DESCRIPTION OF THE DRAWINGS

The above and other aspects, features and advantages of the present invention will be more apparent from the following detailed description taken in conjunction with the accompanying drawings, in which:
FIG. 1 illustrates an example of an evolved UMTS mobile communication system to which the present invention is applied;
FIG. 2 illustrates a concept of persistent scheduling according to the present invention;
FIG. 3 is a graph illustrating the characteristic of a voice traffic according to the VoIP service of the present invention;
FIG. 4 is a graph for illustrating a concept of persistent resource allocation in relation to the voice packet generation period according to the present invention;
FIG. 5 is a signal flow diagram that illustrates signaling between a scheduling apparatus and a User Equipment (UE) according to the first embodiment of the present invention;
FIG. 6 is a signal flow diagram illustrating an operation of a scheduling apparatus for allocating persistent resources by applying different resource allocation periods based on the states of packets according to the first embodiment of the present invention;
FIG 7 illustrates formats of messages for transmitting scheduling information according to the present invention;
FIG. 8 is a flow diagram illustrating an operation of a UE receiving a signaled message including a resource allocation interval according to the first embodiment of the present invention;
FIG. 9 is a signal flow diagram that illustrates signaling between an Evolved Node B (ENB) and a UE according to the second embodiment of the present invention;
FIG. 10 is a signal flow diagram illustrating an operation of an ENB according to the second embodiment of the present invention;
FIG. 11 is a flow diagram illustrating an operation of a UE according to the second embodiment of the present invention;
FIG. 12 is a block diagram illustrating a structure of a scheduling apparatus according to the present invention;
FIG. 13 is a block diagram illustrating a receiving apparatus according to the present invention;
FIG. 14 illustrates a structure of a message including a persistent resource identifier newly defined according to the third embodiment of the present invention;
FIG. 15 is a flow diagram illustrating an operation of a communication apparatus according to the third embodiment of the present invention, in which a UE is employed as an example of the communication apparatus;
FIG. 16 illustrates a relation between the period and the resource allocation pattern according to the present invention; and
FIG. 17 is a block diagram of a communication apparatus according to the third embodiment of the present invention.

### DETAILED DESCRIPTION OF THE EXEMPLARY EMBODIMENT

Hereinafter, exemplary embodiments of the present invention will be described based on a mobile communication system transmitting/receiving packets through Internet Protocols (IPs). Especially, the present invention provides a scheme for allocating persistent resources for packets occurring in real time in such a system. It can be said that the most basic type of a real time packet is, for example, a voice packet. As used herein, packets refer to data units each having a predetermined size, which are consecutively generated. Packets used herein include all types of packets or traffic for convenience of description, although they refer to a set of data units of a particular service.

As used herein, communication apparatuses include all access apparatuses capable of moving and communicating with a particular communication network, such as a terminal, a mobile phone, a Personal Digital Assistant (PDA), and a portable computer. Further, communication apparatuses include all electronic communication apparatuses performing communication with a particular node of a network supporting a particular service. Hereinafter, all types of the communication apparatuses as described are referred to as User Equipment (UE) for convenience of description.

Moreover, although an LTE system is discussed here as an example of a evolved mobile communication system based on the UMTS system for convenience of description, it is of course possible to apply the present invention to other evolved mobile communication systems based on other communication systems. Furthermore, it is of course possible to apply the present invention to other mobile communication systems to which scheduling is applied.

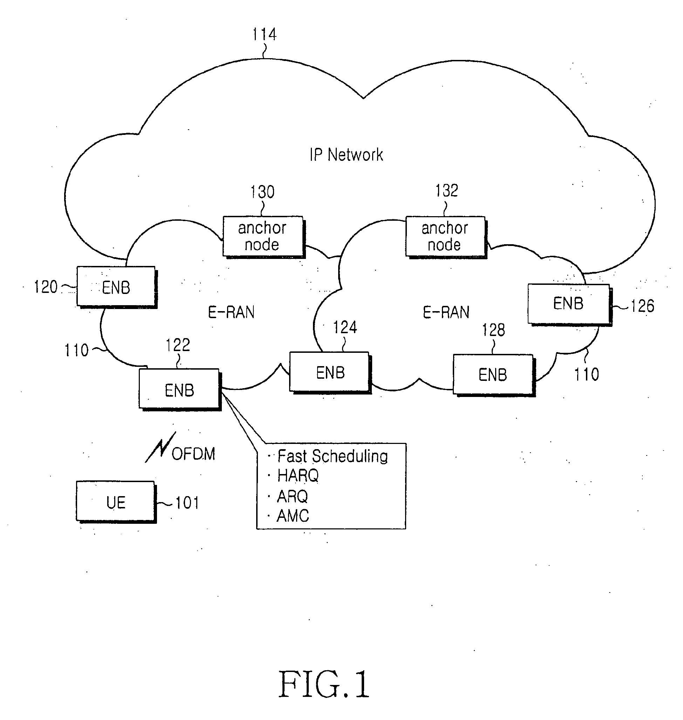

FIG. 1 illustrates an example of an evolved UMTS mobile communication system to which the present invention is applied.

Referring to FIG. 1, an Evolved UMTS Radio Access Network (E-UTRAN) 110 has a simplified 2 node structure, which includes Evolved Node Bs (ENBs) 120, 122, 124, 126, and 128 and anchor nodes 130 and 132.

A User Equipment (UE) 101 refers to an apparatus connected to an Internet Protocol (IP) network 114 through the E-UTRAN 110. Therefore, the UE 101 includes all mobile communication apparatuses capable of performing Internet communication.

The ENBs 120 to 128 refer to nodes corresponding to legacy Node Bs or Node B apparatuses of the 3^{rd} Generation (3G) mobile communication system, which include an apparatus connected to and performing with the UE 101 through a wireless channel. Each of the ENBs 120 to 128 performs a more complicated function with the legacy Node B or Node B apparatus.

In addition, the LTE system requires an apparatus for performing scheduling by collecting situation information of multiple UEs in order to provide all user traffic through a shared channel and a real time service. Therefore, each of the ENBs 120 to 128 includes the scheduling apparatus and is expected to performed scheduling for the multiple UEs.

As used herein, the shared channels include a channel for transmitting user traffics, such as High Speed Packet Data Shared CHannel (HS-PDSCH) of High Speed Downlink Packet Access (HSDPA) or Enhanced Dedicated Physical Data CHannel (E-DPDCH) of Enhanced uplink Dedicated CHannel (E-DCH).

As in mobile communication systems supporting HSDPA or E-DCH service, the Hybrid Automatic Retransmission reQuest (HARQ) scheme is expected to be performed between the ENBs 120 to 128 and the UE 101 in the LTE system also. However, only by the HARQ scheme, it is impossible to satisfy the requirement for various Qualities of Service (QoSs). Therefore, an outer Automatic Retransmission reQuest (ARQ) may be performed in a higher layer. The outer ARQ can also be performed between the UE 101 and the ENBs 120 to 128. As used herein, the HARQ process refers to a process of soft-combining previously-received data with retransmitted data without discarding the previously-received data, thereby improving the ratio of success in the reception.

In more detail, the HARQ receiver determines if a received packet has an error. Then, according to whether the received packet has an error, the HARQ receiver transmits an HARQ positive ACKnowledgment (HARQ ACK) signal or an HARQ Negative ACKnowledgment (HARQ NACK) signal to the HARQ transmitter. In response to the HARQ ACK/NACK signal, the transmitter performs retransmission of the HARQ packet or transmission of a new HARQ packet. Thereafter, the HARQ receiver combines the retransmitted packet with a previously received packet, thereby reducing a probability of error occurrence.

Hereinafter, an evolved mobile communication system, to which a scheduling scheme according to the present invention is applied, will be briefly described. According to an embodiment of the present invention, it is assumed that a scheduler apparatus employing the scheduling scheme is included in the ENB. The transmission/reception of an uplink packet is performed as follows.

A particular scheduling apparatus included in the ENB must allocate transmission resources to a UE, in order to transmit a user packet to the UE or in order to receive an uplink user packet from the UE, that is, in order to make the UE transmit a user packet. The transmission resources are signaled to the UE through a predetermined channel. For example, the transmission resources may be included in a control message signaled to the UE. A particular channel for transmitting the control message includes, for example, a grant channel.

Further, the LTE system is expected to use Orthogonal Frequency Division Multiplexing (OFDM) in a 20 MHz bandwidth as radio access technology. Further, the LTE system is expected to employ Adaptive Modulation and Coding (AMC), in which a modulation scheme and a channel coding rate are determined in accordance with a channel state of the UE.

In a system employing the OFDM, a transmission resource refers to a particular frequency band during a particular time interval. Although still under discussion, the entire system frequency band as the transmission resources is expected to be divided into 24 sub-bands for use in the LTE system.

If a bitmap with a predetermined length is used in order to express the transmission resources and if a UE identifier with a length of about 10 bits is used, allocation information of the transmission resources is expected to be set to have a length of a minimum of 34 bits.

In this regard, if allocation information of the transmission resources is transmitted whenever a packet is transmitted, it is very inefficient in a particular service in which a packet with a predetermined size is continuously generated, such as a VoIP service.

In order to solve the above-mentioned problems, the present invention takes persistent scheduling into consideration. Persistent scheduling is a scheme in which, once a particular transmission resource is allocated to a predetermined UE, the UE can continuously use the allocated transmission resource until the allocation of the transmission resource is cancelled.

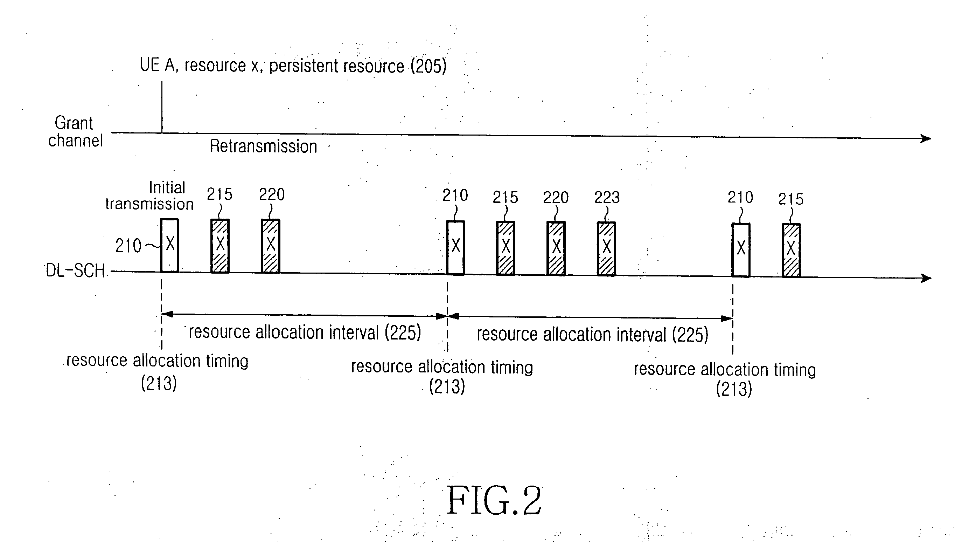

FIG. 2 illustrates a concept of persistent scheduling according to the present invention.

Referring to FIG. 2, in step 205, a particular UE A 205 has been allocated a transmission resource named "x." This transmission resource is a persistent resource, which is allocated to the UE A 205 through a grant channel.

At every resource allocation timing 213, the UE A 205 transmits an uplink packet by using the allocated resource x. In step 210, the UE A 205 transmits an uplink packet by using the allocated resource x. That is, step 210 corresponds to initial transmission of the UE A 205 according to the HARQ. Thereafter, until the UE A 205 receives an HARQ ACK from the ENB, the UE A 205 performs HARQ retransmission at a predetermined point in time by using x, as shown in steps 215, 220, and 223.

Through the persistent resource scheduling scheme, the persistent resource is automatically allocated, even though UE A 205 does not receive separate resource allocation information at every resource allocation timing or even though the ENB does not transmit the resource allocation information to the UE A 205.

Resource allocation interval 225 corresponds to a period at which the resource is allocated. The resource allocation interval 225 includes a period at which the resource is allocated in the retransmission according to the HARQ scheme. That is, as the persistent resource is automatically allocated with the interval 225, the interval has the same meaning as the period. Further, the interval 225 is set based on a packet generation period at which a voice packet with a predetermined size is generated according to the VoIP service.

Therefore, the UE A 205 is automatically allocated a persistent resource having a predetermined size without separate signaling from the ENB at every resource allocation timing 213, so that it is possible to reduce signaling overhead between the UE A 205 and the ENB in relation to the resource allocation information.

With respect to the resource allocation interval 225, the packet generation period of the VoIP traffic according to an actual VoIP service can be generally divided into two types. However, if only one resource allocation interval is used as shown in FIG. 2, it is impossible to employ the persistent resource scheduling technique when the packet generation period and the resource allocation interval are different from each other.

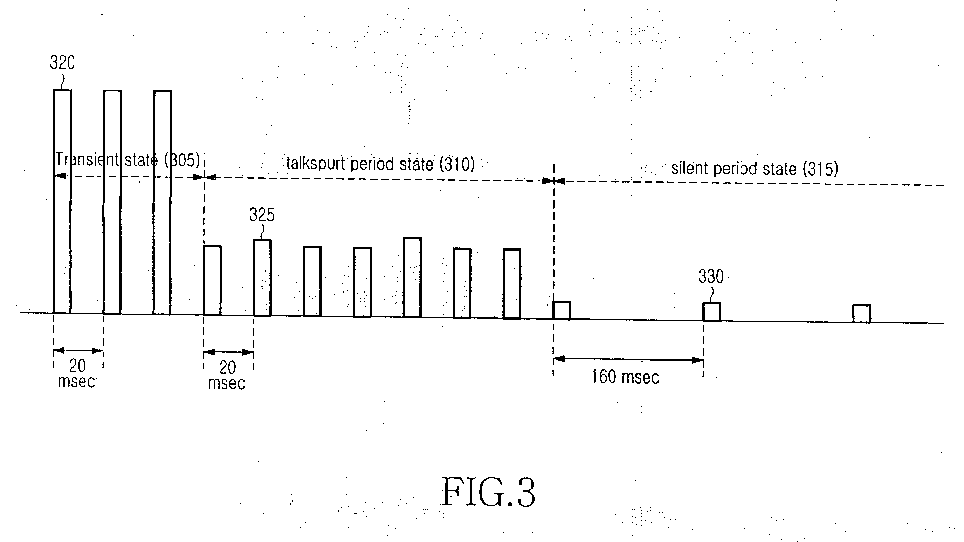

FIG 3 is a graph illustrating the characteristic of a voice traffic according to the VoIP service of the present invention. In a mobile communication system based on UMTS, an AMR codec and a header compression technique are applied in relation to the VoIP service.

Referring to FIG. 3, the packet generation period can be divided into the following three states.
1. The transient state 305 refers to an interval in which header-uncompressed packets are transmitted. In the transient state 305, relatively large packets each having a size of about 800 bits are generated, because a header compressing apparatus transmits several initial packets without compressing headers of the packets during the transient state 305.
2. The talkspurt state 310 refers to a state in which a user generates actual voice data. In other words, the talkspurt state 310 refers to a state after the transient state 305, in which header compressing apparatus transmits packets after compressing headers of the packets. In the talkspurt state 310, consecutive packets 325 having a length of about 300 bits are generated. The sizes of the compressed headers are different according to field values of the headers, and the headers are usually set to have a size of 24 bits. Of course, the headers may be set to have a size greater than 24 bits.
3. The silent state 315 refers to an idle interval in which the user does not generate voice data. In the silent state 315, packets 230 having about 100 bits are generated.

The packet generation period of the transient state 305 and the talkspurt state 310 is determined to be 20 msec, and the packet generation period of the silent state 315 is determined to be 160 msec.

When the period of resource allocation for transmission of the voice packets, that is, the resource allocation interval 225, is set to be 20 msec, it is impossible to use the persistent resources in the silent state having a period of 160 msec.

It is expected that the persistent resource scheduling technique for the VoIP service can reduce the signaling overhead between the UE and the ENB, but no detailed scenario for actual use of the persistent resources currently exists.

Therefore, the present invention provides an apparatus and a method for allocating persistent resources in consideration of various packet generation periods in order to support a VoIP service. The ENB signals the allocated resource and the resource allocation period to the UE at a predetermined point in time, thereby achieving a more efficient allocation of persistent resources. Further, the present invention proposes the use of changeable resource allocation intervals when allocating the persistent resources, which can achieve efficient transmission/reception of packets.

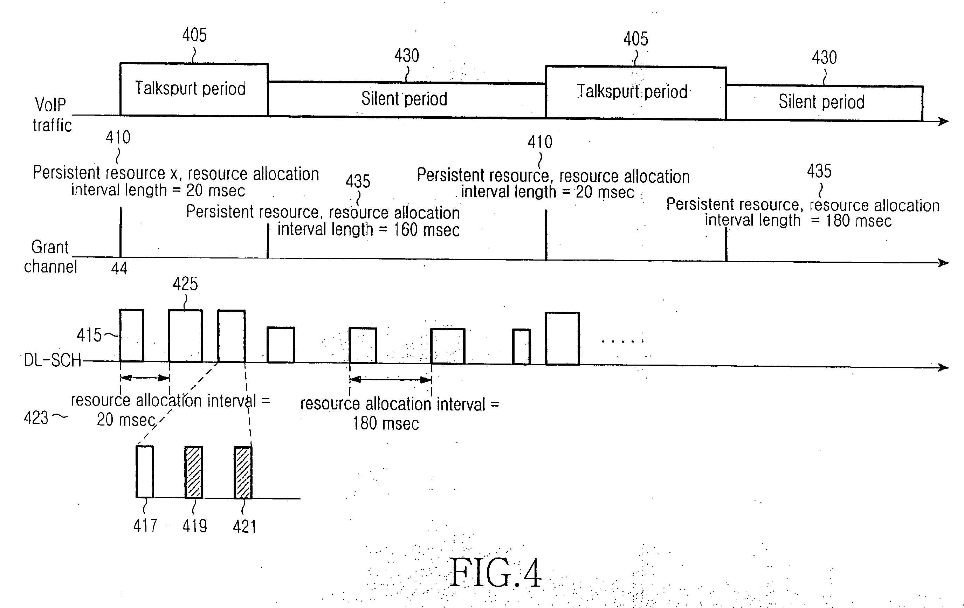

FIG. 4 is a graph for illustrating a concept of persistent resource allocation in relation to the voice packet generation period according to the present invention.

Referring to FIG. 4, in a VoIP service, a voice packet exists in one of the talkspurt state 405 and the silent state 430 at a predetermined period. The transient state implies a state in which a voice packet has been temporarily generated, and this voice packet enters the talkspurt state 405 or the silent state 430 after the passage of predetermined time.

In this regard, the scheduling apparatus determines the state of a VoIP packet, and allocates a proper persistent resource according to the state of the packet based on a result of the determination. Then, the scheduling apparatus signals to the UE through a grant channel the persistent resource according to the determined packet state and the resource allocation period of the persistent resource. The UE is automatically allocated a persistent resource by checking a DownLink Shared CHannel (DL-SCH) at every notified resource allocation period. The DL-SCH refers to a channel through which user data is transmitted.

The scheduling apparatus identifies that the VoIP packet is in the talkspurt state 405, and allocates a persistent resource, which has a size capable of processing a packet generated in the talkspurt state, to the UE. That is, the scheduling apparatus performs the resource allocation 410 at a period of 20 msec. Based on the persistent resource allocation time point 410, the UE is automatically allocated a persistent resource at a period of 20 msec. Further, the UE performs the HARQ operation within a period of 20 msec. Each rectangle shown on the DL-SCH indicates the HARQ operation performed through the persistent resource. Each rectangle 415 includes an initial HARQ transmission 417 and retransmissions 419 and 421.

Thereafter, the UE transmits a new voice packet by using a persistent resource automatically allocated by the ENB at a point in time after the passage of the talkspurt state resource allocation period, which is 20 msec, from the persistent resource allocation time point 410. Then, a downlink HARQ operation is performed for the newly transmitted voice packet.

The scheduling apparatus identifies that the VoIP packet is in the silent state 430, and allocates a downlink persistent resource, which has a size capable of processing a packet generated in the silent state, to the UE. That is, the scheduling apparatus signals a resource allocation period of 160 msec together with the resource allocation 435. Then, the UE recognizes the point in time, at which the persistent resource is newly allocated, as a new resource allocation time point 435, and performs a downlink HARQ operation based on the new resource allocation time point 435.

As described above, the scheduling apparatus automatically allocates the persistent resources to the UE based on the resource allocation periods having different lengths according to the state of the VoIP packets. The UE performs HARQ retransmission through the automatically allocated persistent resource by using the resource allocation period according to the state of the VoIP packets.

### 1^{st} Embodiment

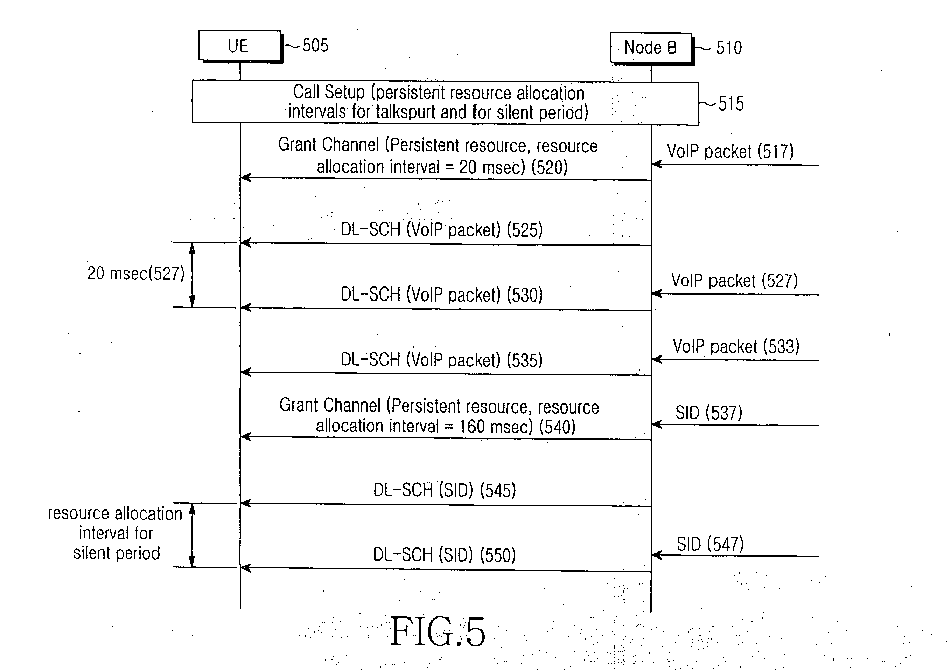

FIG. 5 is a signal flow diagram that illustrates signaling between a scheduling apparatus and a UE according to the first embodiment of the present invention. According to the present invention, the scheduling apparatus may be included in the ENB. In FIG. 5, the scheduling apparatus is expressed as an ENB corresponding to a system node communicating with the UE.

Referring to FIG. 5, the ENB 510 receives notification of parameters relating to a call from a UE or a higher layer node during call setup with the UE 505. The parameters relating to a call may include codec types for a VoIP service, a mode of a particular codec, etc. According to the present invention, the ENB 510 can identify a silent state packet generation period or a talkspurt state packet generation period by using the mode of a corresponding codec.

For example, in the case of an AMR codec mainly used in a UMTS system, the talkspurt state packet generation period is 20 msec while the silent state packet generation period is 160 msec. Further, in the case of another codec, the talkspurt state packet generation period and the silent state packet generation period may have values different from the above values. However, it goes without saying that such period values are within the scope of the present invention.

In step 515, the ENB 510 transmits a radio bearer setup message to the UE 505 for a call setup with the UE. The radio bearer setup message includes a resource allocation period in consideration of a generation period of a particular packet, that is, the talkspurt state packet generation period or the silent state packet generation period, in relation to the VoIP service.

At this time, the ENB 510 may use identifiers for identifying multiple packet generation periods of an available particular codec, so as to achieve easier signaling of the resource allocation resource. As described above, the resource allocation periods of the AMR codec include 20 msec and 160 msec. Therefore, the ENB 510 may set the resource allocation period 1 as 20 msec and the resource allocation period 2 as 160 msec and may then signal the set periods to the UE 505. Since the UE 505 also uses the same Adaptive Multi-Rate (AMR) codec, the UE 505 is aware of the resource allocation periods mentioned above.

After passage of predetermined time from when the radio bearer between the ENB 510 and the UE 505 is successfully set in step 515, the ENB 510 receives a VoIP call from a higher layer node, that is, is notified of the start of a VoIP session by a higher layer node in step 517.

In step 520, the ENB 510 identifies a state of the call by comparing the received VoIP packet with a packet defined in the AMR codec. Further, the ENB 510 identifies the packet generation period according to the state of the call and then allocates a persistent resource based on the identified packet generation period.

In general, a packet according to a VoIP packet includes Internet Protocol/User Data Protocol/Real-time Transport Protocol (IP/UDP/RTP) headers and a payload. A voice frame generated from the AMR codec is converted into a VoIP packet through IP/UDP/RTP entities.

According to the definition about the sizes of the IP/UDP/RTP headers, a full header has a size of 60 bytes and a compressed header has a size of 3 to 15 bytes based on the IP version 6 (IPv6). Further, the AMR codec has a payload having a size that changes according to the mode of each codec.

Therefore, the size of the VoIP packet has a value within a predetermined range according to a used AMR codec mode, that is, the VoIP packet has a fixed size. Table 1 below is a table defining sizes of VoIP packets according to the codec modes.

**Table 1**

| AMR codec mode | Payload size (byte) | Full header size in (byte) | Compressed header size (byte) |
|---|---|---|---|
| AMR 4.75 kbit/s | 14 | 79 | 17 ~ 29 |
| AMR 5.15 kbit/s | 15 | 80 | 18 ~ 30 |
| AMR 5.90 kbit/s | 16 | 81 | 19 ~ 31 |
| AMR 6.70 kbit/s (PDC-EFR) | 18 | 83 | 21 ~ 33 |
| AMR 7.40 kbit/s (TDMA-EFR) | 20 | 85 | 23 ~ 35 |
| AMR 7.95 kbit/s | 22 | 87 | 25 ~ 37 |
| AMR 10.2 kbit/s | 27 | 92 | 30 ~ 42 |
| AMR 12.2 kbit/s (GSM-EFR) | 32 | 97 | 35 ~ 47 |
| AMR SID | 7 | 72 | 10 ~ 22 |

In Table 1, the AMR SIlence Descriptor (SID) refers to a size of a packet generated in the silent period, and each of the other AMR codec modes refers to a size of a packet generated in a traffic period of each codec mode.

Therefore, if the ENB 510 is aware of usable codecs according to the VoIP services, that is, if the ENB 510 is aware of the information in Table 1, the ENB 510 can predict a state of a current VoIP from the received VoIP call by using the information of Table 1.

For example, if a codec mode of AMR 12.2 kbps is used in relation to a predetermined VoIP call, packets with a size of 97 bytes are generated in the transient state, packets with a size of 35 ∼ 47 bytes are generated in the talkspurt state, and packets with a size of 10 ~ 22 bytes are generated in the silent state.

Therefore, the ENB 510 recognizes that the VoIP session is in the transient state if the size of the received packets is about 97 bytes, recognizes that the VoIP session is in the talkspurt state if the size of the received packets is 35 ∼ 47 bytes, and recognizes that the VoIP session is in the silent state if the size of the received packets is not greater than 22 bytes.

Therefore, in step 520, based on the VoIP packet transferred from a higher layer node, the ENB 510 determines a persistent resource to be allocated, and then determines a resource allocation period according to the determined persistent resource. Then, the ENB 510 signals the determined resource and allocation period to the UE 505 through the grant channel.

Usually, packets according to a VoIP call start from the transient state. As used here, a session refers to packets consecutively transmitted during a predetermined time interval. Therefore, there is a high probability that an initially received VoIP packet is a packet with 97 bytes having a full header. Then, the ENB 510 allocates a persistent resource for transmission of 97 bytes, and signals to the UE 505 that the resource allocation period of the persistent resource is 20 msec.

In step 525, the UE 505 performs HARQ reception for the packet received through the persistent resource. The HARQ reception is repeated until an HARQ ACK is received.

After passage of the resource allocation period, that is, after passage of 20 msec, the ENB 510 transmits a newly generated VoIP packet to the UE 505 through an automatically allocated persistent resource. That is, in step 530, the UE 505 receives a VoIP packet newly generated at a time point 527 after the passage of the resource allocation interval of 20 msec from the time point 525 of allocation of the previous persistent resource, and performs HARQ reception for the received packet.

The packet generation period at the transient state is identical to the packet generation period of the talkspurt state. Therefore, the same resource allocation period is used in the transient state and the talkspurt state.

In step 537, which corresponds to a predetermined time point, the ENB 510 receives a packet having a size corresponding to the silent state and recognizes that the VoIP session has shifted to the silent state.

In step 540, the ENB 510 allocates a resource having a size capable of transmitting a packet of the silent state as the persistent resource, and signals the persistent resource to the UE 505 through the grant channel. At this time, the ENB 510 signals the resource allocation period of the persistent resource together with the persistent resource. As described above, the resource allocation period of the silent state is 160 msec.

In step 545, the UE 505 performs HARQ reception for the packet received through the persistent resource for the silent state at the time point 540 at which the persistent resource is allocated.

In step 550, after passage of 160 msec, the ENB 510 transmits a new SID packet through a persistent resource corresponding to the silent state. Further, the UE 505 performs HARQ reception for the received packet.

According to the present invention as described above, the state of a generated packet is identified through the identification of the mode of the usable AMR codec usable by the UE 505 and the ENB 510, and a persistent resource is then allocated in consideration of the generation period of the packet. The persistent resource is automatically allocated at every resource allocation period without separate signaling, that is, without transmission of separate resource allocation information from the ENB 510 to the UE 505.

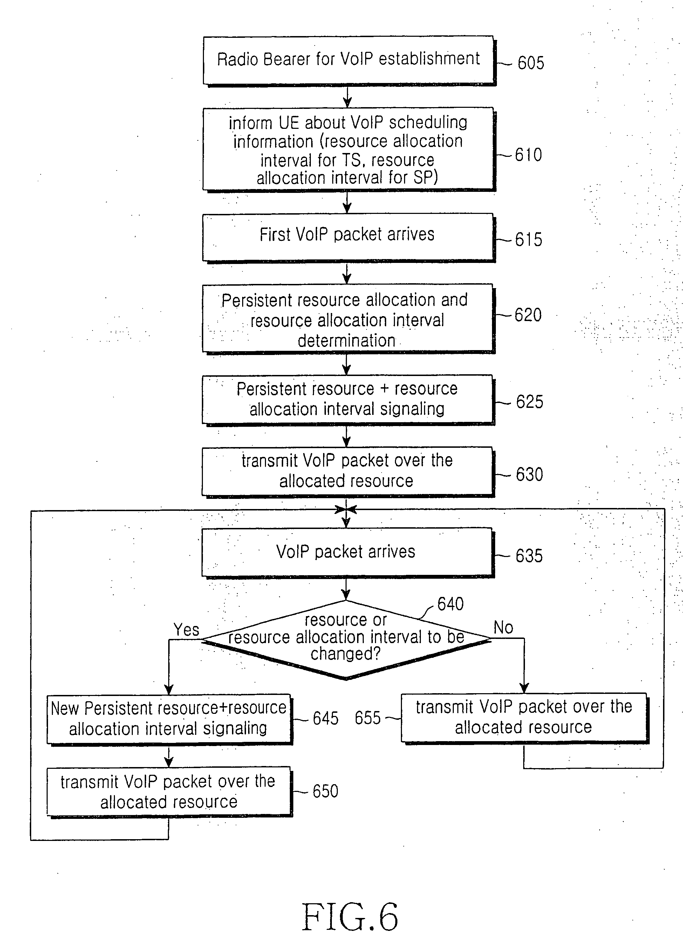

FIG. 6 is a signal flow diagram illustrating an operation of a scheduling apparatus for allocating persistent resources by applying different resource allocation periods based on the states of packets according to the first embodiment of the present invention.

Referring to FIG. 6, in step 605, the ENB sets a radio bearer with the UE for transmission of a VoIP packet and retransmission according to the HARQ operation.

In setting the radio bearer, the ENB can include a layer for constructing a generated voice frame into a protocol packet in order to satisfy the quality of the VoIP service, a layer for processing headers of the packet, a layer for converting the packet into a proper form for transmission through a radio channel, and a layer for transmitting the packet through the radio channel.

For example, the ENB includes a Radio Link Control (RLC) entity, a Medium Access Layer (MAC) entity, etc. In the ENB, a Packet Data Convergence Protocol (PDCP) layer may include a header compression/decompression apparatus and a ciphering/deciphering apparatus in relation to ciphering and deciphering of the packet.

In step 610, the ENB determines scheduling information in consideration of a required service quality of the VoIP service, and transmits the determined scheduling information to the UE. The scheduling information is transmitted to the UE through a control message.

The scheduling information includes information about the configuration of apparatuses for the VoIP service, a persistent resource having a size determined based on the VoIP packet, and a resource allocation period of a persistent resource according to the generation period of the VoIP packet. For example, when the VoIP packet is in the talkspurt state or the transient state, the resource allocation period of the persistent resource is 20 msec. In contrast, when the VoIP packet is in the silent state, the resource allocation period of the persistent resource is 160 msec.

In step 615, when a first VoIP packet from a higher layer node arrives at the ENB at a predetermined point in time, the ENB identifies the state of the VoIP call by identifying the size of the VoIP packet. That is, the ENB determines if the VoIP packet is a packet generated in a transient state, a packet generated in a talkspurt state, or a packet generated in a silent state.

In step 620, the ENB determines the size of the persistent resource and the resource allocation period of the persistent resource based on the identified state of the packet. For example, when a 12.2 kbps codec mode is used for the VoIP service and if the VoIP packet is a packet generated in a talkspurt state, a transmission resource capable of processing about 35 bytes is allocated as the persistent resource, and the allocation period of the resource is determined to be 20 msec.

In step 625, the ENB transmits to the UE the allocated persistent resource and the determined resource allocation period. The ENB transmits such information to the UE through a grant channel. The allocation period may be either transmitted by using a separate field or incorporated into a transmitted existing field.

In step 630, the ENB transmits the VoIP packet through the allocated persistent resource.

After identifying the arrival of the VoIP packet from a higher layer node in step 635, the ENB identifies the state of the VoIP packet by identifying the size of the VoIP packet in step 640. In other words, in step 640, the ENB determines if it is necessary to change the previously allocated persistent resource or if it is necessary to change the allocation period of the persistent resource.

As a result of the determination in step 640, when it is necessary to change the scheduling information, that is, when it is necessary to change the persistent resource and thus change the resource allocation period because the state of the new packet is different from the state of the previous packet, the ENB newly allocates a persistent resource corresponding to the VoIP packet of step 635, determines the allocation period of the newly allocated persistent resource, and then transmits the determined allocation period to the UE in step 645.

Thereafter, the ENB transmits a VoIP packet through the newly allocated persistent resource in step 650, and then proceeds to step 635 in which the ENB waits for the arrival of a new VoIP packet.

As a result of the determination in step 640, when it is unnecessary to change the previously allocated resource, the ENB transmits the VoIP packet generated in step 635 through the previously allocated persistent resource in step 655.

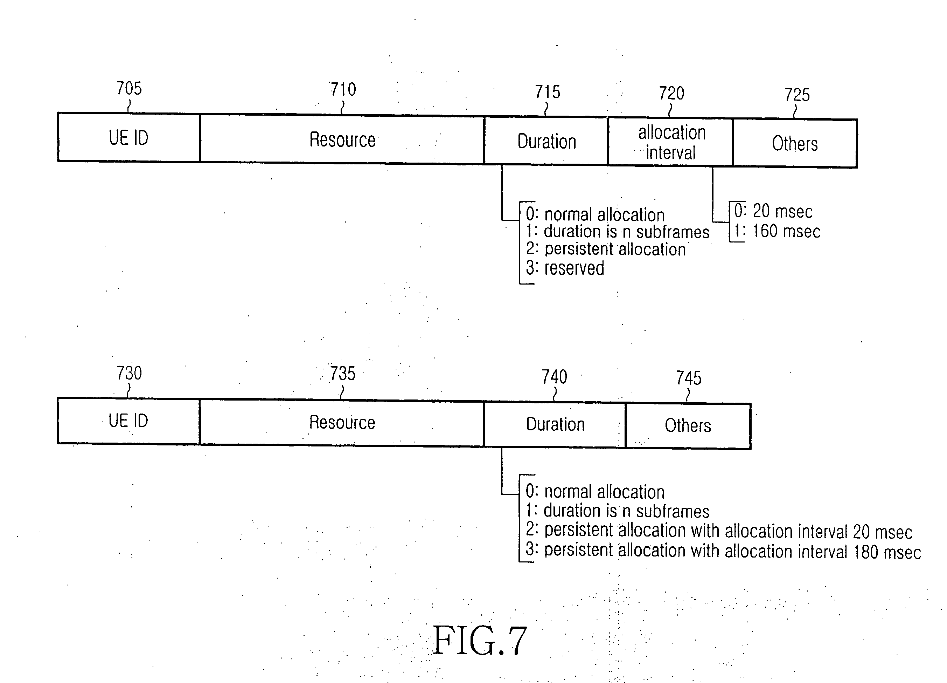

Diagrams (a) and (b) of FIG. 7 illustrate formats of messages for transmitting scheduling information according to the present invention, and specifically show the structures of resource allocation information messages including a newly defined resource allocation interval. Referring to diagram (a) of FIG 7, the scheduling information includes a UE identifier 705, information 710 on the resource allocated to the UE, information 715 about the duration indicating a characteristic of the resource, an allocation interval 720 of the allocated resource, and other control information related to allocation of the resource.

The UE identifier 705 indicates identification information for discriminating between a particular UE, to which a transmission resource having a particular size for the VoIP service is allocated, and other UEs.

The resource information 710 indicates logical identification information for the allocated resource.

The duration information 715 corresponds to information about a duration usable for the allocated resource. For example, when the duration information 715 has two bits, each code point of the two bits includes a meaning determined between the UE and the ENB. For example, code point 0 implies that the allocated resource is available during only one sub-frame. Code point 1 implies that the allocated resource is available during n number of sub-frames. Code point 2 implies that the allocated persistent resource is available until another persistent resource is newly allocated. Code point 3 has not been defined yet but implies that the allocated resource is available during a predetermined time interval given in advance by a system operator. Code point 3 may be allocated a certain value defined between the UE and the ENB.

The allocation interval 720 is a newly defined field and refers to a time interval to which a persistent resource is automatically allocated. That is, a persistent resource allocated at a predetermined previous time point is automatically allocated again after passage of the allocation interval 720. At this time, the allocation interval 720 may be mapped and transmitted in the form of a code point. The relation between the allocation interval and the code point may be defined in the process of call setup.

For example, when a field value of the allocation interval 720 is set to 0, an allocation interval of a predetermined persistent resource may imply 20 msec. When the field value of the allocation interval 720 is set to 1, an allocation interval of a predetermined persistent resource may imply 160 msec.

Diagram (b) of FIG. 7 illustrates a format of a message for transmitting scheduling information according to another embodiment of the present invention.

Referring to diagram (b) of FIG. 7, the scheduling information includes a UE identifier 730, resource information 735, information 740 about the duration indicating a characteristic of the resource, and other control information. The same description as that for diagram (a) of FIG. 7 can be applied to the UE identifier 730 and resource information 735 on the resource allocated to the UE.

Especially, the duration information 740 of diagram (b) of FIG. 7 may indicate both information about a duration usable for the allocated resource and an interval for allocation of the resource.

For example, when the duration information 740 has two bits, code point 0 implies that the allocated resource is available during only one sub-frame. Code point 1 implies that the allocated resource is available during a predetermined n number of sub-frames. Code point 2 implies that the persistent resource is allocated with an interval of 20 msec and the previously-allocated persistent resource is available until another persistent resource is newly allocated. Code point 3 implies that the persistent resource is allocated with an interval of 160 msec and that the previously-allocated persistent resource is available until another persistent resource is newly allocated. Therefore, in the case of the format shown in diagram (b) of FIG. 7, it is unnecessary to separately arrange the allocation interval field 720 of diagram (a) of FIG. 7.

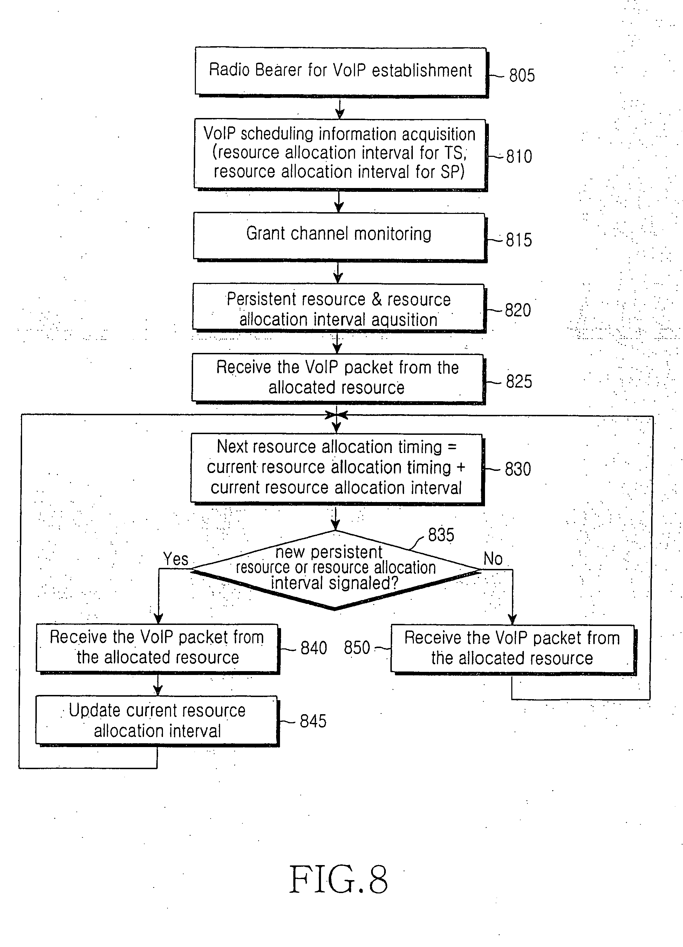

FIG. 8 is a flow diagram illustrating an operation of a UE receiving a signaled message including a resource allocation interval according to the first embodiment of the present invention.

Referring to FIG. 8, in step 805, the UE sets a radio bearer according to a call setup between the UE and the ENB. The call setup information may include information for the reception of a VoIP packet and execution of an HARQ operation for the received VoIP packet.

In order to support a VoIP service, the UE includes typical apparatuses and entities for converting a voice frame into a packet in order to support the VoIP service and processing the packet, such as, for example, a PDCP entity (header compression/decompression apparatus, ciphering/deciphering apparatus, etc.), a MAC entity, and an RLC entity. Therefore, the UE receives configuration information of corresponding apparatuses for the VoIP service from the ENB, and sets the radio bearer by referring to the configuration information.

In step 810, the UE acquires scheduling information in relation to the VoIP service through the set radio bearer. The scheduling information includes information as shown in diagrams (a) and (b) of FIG. 7.

In step 815, the UE monitors if a persistent resource is allocated by the ENB. According to the present invention, a grant channel is used to allocate a persistent resource.

In step 820, the UE is allocated a persistent resource through a grant channel, and acquires an interval for the allocated persistent resource. The allocation interval can be obtained from the scheduling information acquired during previous call setup.

In step 825, the UE receives a VoIP packet by using the allocated persistent resource, and performs an HARQ operation for the received VoIP packet.

In step 830, the UE calculates a point in time for the allocation of a next persistent resource. In this calculation, an allocation interval of a corresponding persistent resource may be reflected based on the point in time at which the persistent resource is allocated. Therefore, the UE is automatically allocated a persistent resource again at a point in time after passage of the allocation period.

Thereafter, at a point in time after passage of predetermined time, that is, in step 835, the UE determines, by monitoring the grant channel, if a new persistent resource different from the previous persistent resource is allocated or if a new resource allocation interval in relation to the corresponding resource is transmitted. That is, the UE determines if changed scheduling information is signaled. The UE proceeds to step 840 when changed new scheduling information is transmitted, while proceeding to step 850 when the previous resource or the previous resource allocation period is maintained.

In step 840, the UE receives a VoIP packet through the newly allocated persistent resource, and performs HARQ reception for the received packet. Then, in step 845, the UE updates the resource allocation interval to a new value based on the newly allocated persistent resource, and then proceeds to step 830. Then, the UE calculates a next resource allocation time point by using the updated resource allocation interval.

In step 850, the UE receives the VoIP packet through the previously allocated persistent resource, and performs HARQ reception for the received packet. As described above, the first embodiment of the present invention proposes a scheme for transmitting scheduling information through the grant channel.

### 2^{nd} Embodiment

The second embodiment of the present invention proposes a scheme for indirectly obtaining the scheduling information from the size of a transmitted packet or a channel state of resource allocation without direct transmission of the scheduling information. Therefore, the second embodiment can prevent an increase in the size of the message due to the scheduling information according to the first embodiment of the present invention. As described above, a packet generation period of the transient state or the talkspurt state is 20 msec, and the packet generation period of the silent state is 160 msec. Further, a packet generated in the silent state is remarkably smaller than a packet generated in the transient state or the talkspurt state. Therefore, by referring to the size of the transmitted packet, it is possible to determine the current state of a VoIP call. Also, it is possible to determine the resource allocation interval from the current state.

For example, as shown in Table 1, although there are slight variances according to the header compression state, the SID packet generated in the silent state has a size of usually 10 bytes and a maximum of 22 bytes. Therefore, it is possible to conclude that the resource allocation period is 160 msec when the packet has a size not greater than 22 bytes and the resource allocation period is 20 msec when the packet has a size not less than 23 bytes.

Further, when a packet is transmitted through the DL-SCH, the size of the transmitted packet may be clearly signaled by using a part of the resource. Then, it is possible to indirectly obtain the resource allocation period from the size of the transmitted packet.

When the size of the transmitted packet is not clearly signaled, it is possible to obtain the size of the corresponding packet from the size of the resource, the modulation scheme, etc. especially in uplink transmission. At this time, it is possible to derive the resource allocation period after deriving the size of the packet from information relating to the packet size.

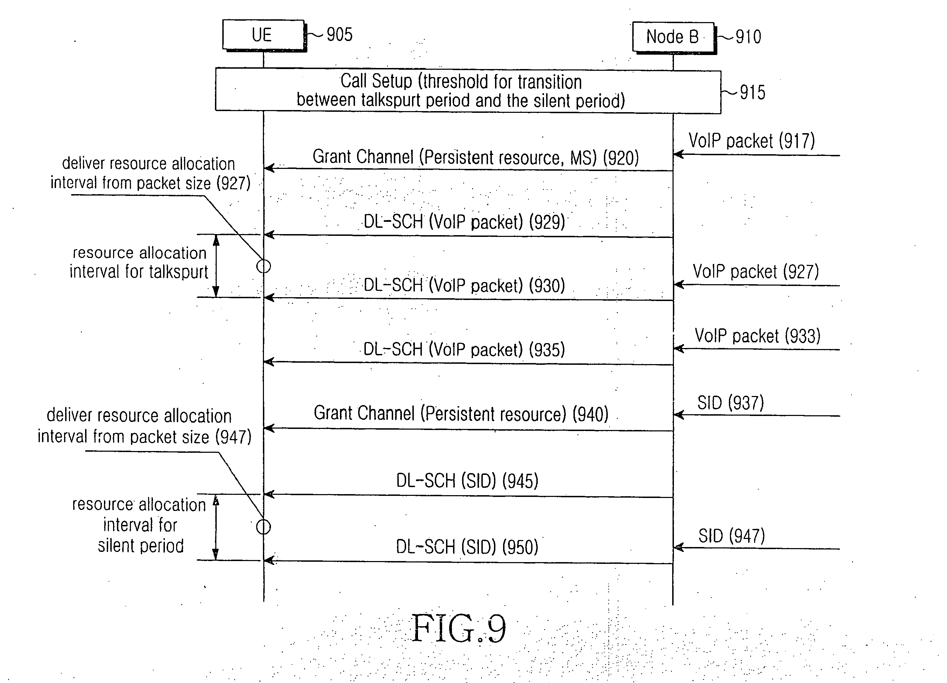

FIG. 9 is a signal flow diagram that illustrates signaling between an ENB and a UE according to the second embodiment of the present invention.

Referring to FIG. 9, the ENB 910 receives a notification of the parameters relating to a call from a higher layer node during call setup with the UE 905. The parameters relating to a call may include codec types available for a VoIP service, a mode of a particular codec, etc.

The ENB 910 can identify the packet generation period of the talkspurt state or the silent state by using the mode of a corresponding codec. Further, the ENB 910 determines a standard for the determination of the resource allocation period.

The resource allocation period determination standard corresponds to a standard for determination of the resource allocation period. For example, if the packet size is selected as the resource allocation period determination standard, the resource allocation period determination standard may have a value between a packet size of a packet generated in resource allocation period #1 and a packet size of a packet generated in resource allocation period #2. In a system in which the packet size is not clearly signaled, the size of the resource and the modulation scheme may be used as the resource allocation period determination standard.

It is assumed that a 375 kHz bandwidth during 0.5 msec is allocated as a minimum transmission resource. Here, the 375 kHz bandwidth during 0.5 msec is called a resource block. One resource block may include 125 uncoded-and-unmodulated bits. Then, if one resource block to which Quadrature Phase Shift Keying (QPSK) modulation is applied is allocated, the resource block may transmit 250 uncoded bits.

Therefore, when one resource block is allocated and QPSK is applied, it implies that a packet in the silent state is transmitted. Therefore, it is possible to conclude that the resource allocation period is 160 msec. Meanwhile, when at least two resource blocks are allocated or when 16Quadrature Amphtude Modulation(QAM) or 64QAM is applied as the modulation scheme, it is possible to conclude that the resource allocation period is 20 msec.

In step 915, the ENB 910 determines the resource allocation period determination standard and relates the determined standard to the UE. The resource allocation period determination standard may be included in a transmitted VoIP radio bearer setup message.

As the resource allocation period determination standard, one of the following two standards may be used.
Standard 1: packet size
Standard 2: number of resource blocks and modulation scheme

In the case of using Standard 1, the UE determines that the resource allocation period is 20 msec (resource allocation period 1) when the received packet has a size greater than Standard 1. In contrast, when the received packet has a size less than Standard 1, the UE determines that the resource allocation period is 160 msec (resource allocation period 2).

In the case of using Standard 2, the UE determines that the resource allocation period is 160 msec when the number of the allocated persistent resource blocks and the modulation scheme have no change. When an increased number of allocated persistent resource blocks are allocated or a changed modulation scheme is applied, the UE determines that the resource allocation period is 20 msec.

After the passage of a predetermined time from when the radio bearer between the ENB 910 and the UE 905 is successfully set, the ENB 910 identifies reception of a VoIP packet from a higher layer node in step 917.

In step 920, the ENB 910 identifies the packet state and the generation period according to the packet state by comparing the received VoIP packet with a packet defined in the AMR codec. Further, the ENB 910 allocates a persistent resource and a modulation scheme to be applied based on the packet state. At this time, the ENB 910 allocates the persistent resource through the grant channel. Together with the allocation of the resource, the modulation scheme can be also signaled.

As described above, the VoIP packet starts from the transient state, and thus it is highly probable that initially received VoIP packets are packets having a size of 97 bytes having a full header. In this case, the ENB 910 can persistently allocate a transmission resource having a size capable of transmitting 97 bytes. At this time, the allocation period of the persistent resource is 20 msec.

Therefore, the ENB 910 transmits the VoIP packets through the persistent resource, and the persistent resource may include information on the size of the packet.

In step 925, the UE 905 receives the packet through the persistent resource and performs HARQ reception for the received packet.

In step 960, the UE 905 uses Standard 1 (i.e. packet size) as the resource allocation period determination standard, and when the UE receives clear signaling of packet size information through the allocated resource, the UE identifies the current resource allocation period by comparing the size of the received packet with the resource allocation period determination standard. Otherwise, when Standard 2 is applied, the UE 905 can identify the resource allocation period by using the number of resource blocks and the modulation scheme. The description about FIG. 9 is based on Standard 1.

Thereafter, in step 927, the ENB 910 recognizes the arrival of a new VoIP packet from a higher layer node. Then, after the passage of as much time as the resource allocation period of step 925, that is, after passage of 20 msec, the ENB transmits the VoIP packet through the persistent resource in step 930. Therefore, the UE 905 receives a VoIP packet through the persistent resource automatically allocated at a point in time after the passage of as much time as the resource allocation interval from the point in time of the allocation of the previous persistent resource, and performs the HARQ reception for the received packet.

After the passage of the predetermined time, the ENB receives a packet having a packet size corresponding to the silent state and recognizes that the VoIP session has shifted to the silent state.

In step 940, the ENB allocates a resource having a size large enough to transmit a packet of the silent state as the persistent resource, and signals the persistent resource to the UE through the grant channel.

In step 945, the UE performs HARQ reception for the signal received through the persistent resource at the point in time at which the persistent resource is allocated.

At this time, if clear signaling of the packet size information is received, the UE recognizes, by comparing the packet size and the resource allocation period determination standard, that the resource allocation period has changed from 20 msec to 160 msec.

That is, in step 947, the UE recognizes that the packet size of the received packet is less than the Standard 1 and that the resource allocation period has changed to 160 msec. Otherwise, by referring to the number of resource blocks and the modulation scheme, the UE may recognize the change of the resource allocation period. The UE recognizes that the number of resource blocks and the modulation scheme are identical to the Standard 2 and that the resource allocation period has changed to 160 msec.

In step 950, the ENB 910 transmits a new SID packet through a resource newly allocated after passage of a new resource allocation period. Further, the UE performs HARQ reception for a signal received through the persistent resource at a point in time after the passage of as much time as the new resource allocation period from the point in time of the previous persistent resource allocation.

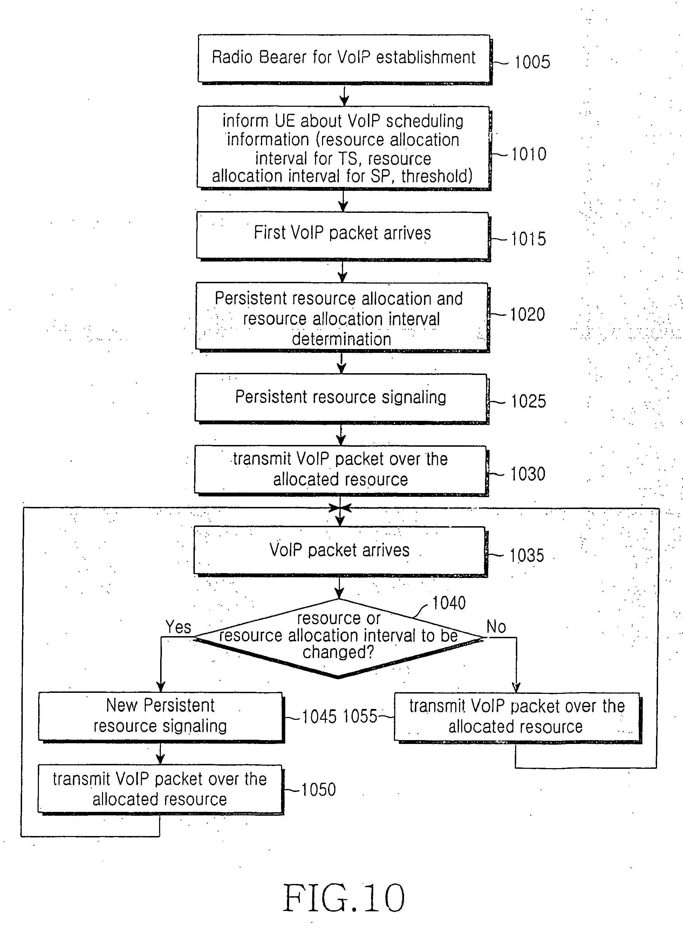

FIG 10 is a signal flow diagram illustrating an operation of an ENB according to the second embodiment of the present invention.

Referring to FIG. 10, in step 1005, the ENB sets a radio bearer for transmission/reception of a VoIP packet.

In step 1010, the ENB transmits resource allocation period configuration information to the UE, in order to use a persistent resource for transmission/reception of a VoIP packet. That is, the ENB signals to the UE that resource allocation period #1 having a size of 20 msec is used in the talkspurt state or the transient state and resource allocation period #2 having a size of 160 msec is used in the silent state. Further, the ENB signals the resource allocation period determination standards to the UE.

As the resource allocation period determination standard, either the packet size or the number of resource blocks and modulation scheme may be used. When the packet size is used as the resource allocation period determination standard, the ENB signals a predetermined value as the resource allocation period determination standard, and the UE compares the size of a received packet with the predetermined value, and determines to employ resource allocation period #1 when the packet size is greater than the predetermined value and resource allocation period #2 when the packet size is less than the predetermined value.

When the number of resource blocks and modulation scheme are used as the resource allocation period determination standard, the ENB signals a predetermined value as the resource allocation period determination standard, and the UE determines to employ resource allocation period #2 when the number of resource blocks and modulation scheme coincide with the predetermined value. In the other case, the UE determines to employ resource allocation period #1.

Further, the resource allocation period information and the resource allocation period standard can be transmitted through a control message during setup of the radio bearer.

In step 1015, when a first VoIP packet arrives at the ENB, the ENB determines if the VoIP packet is a packet generated in a transient state, a packet generated in a talkspurt state, or a packet generated in a silent state.

In step 1020, the ENB determines the size of the persistent resource and the resource allocation period of the persistent resource based on the identified state of the packet.

For example, in the case of a packet generated in a talkspurt state of a 12.2 kbps codec mode, the persistent resource to be allocated has a size of 35 bytes, and the allocation period of the resource is 20 msec.

In step 1025, the ENB allocates the determined persistent resource to the UE. The resource allocation can be performed through a grant channel. In step 1030, the ENB transmits the VoIP packet through the allocated persistent resource. At this time, the ENB may signal the packet size information by using a portion of the persistent resource.

Upon the arrival of a new VoIP packet in step 1035, the ENB identifies the state of the VoIP packet and determines if it is necessary to change the previously allocated persistent resource or if it is necessary to change the allocation period of the persistent resource in step 1040. Then, when it is necessary to change the scheduling information because the state of the new packet is different from the state of the previous packet, the ENB proceeds to step 1045.

When the state of the new packet is the same as the state of the previous packet and it is unnecessary to change the scheduling information, the ENB proceeds to step 1055.

In step 1045, the ENB determines a new persistent resource and a new modulation scheme and signals the determined resource and scheme to the UE through a grant channel. Then, the ENB transmits a VoIP packet through the newly allocated persistent resource in step 1050, and then proceeds to step 1035 in which the ENB waits for arrival of a new VoIP packet.

In step 1055, the ENB transmits the VoIP packet through the previously allocated persistent resource, and then proceeds to step 1035 in which the ENB waits for arrival of a new VoIP packet.

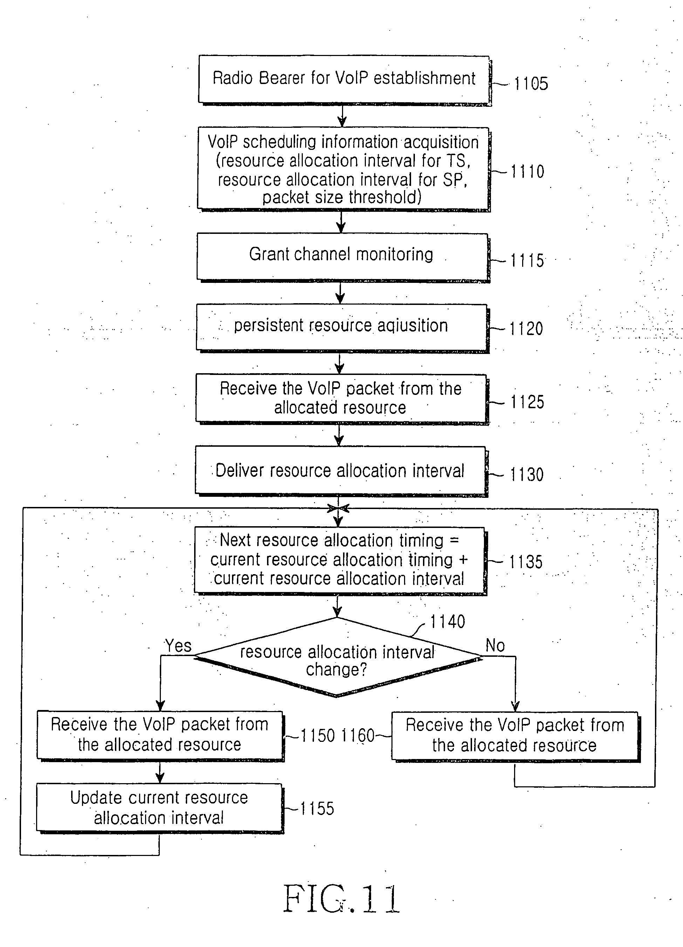

FIG. 11 is a flow diagram illustrating an operation of a UE to the second embodiment of the present invention.

In step 1105, the UE sets a radio bearer according to call setup between the UE and the ENB. The radio bearer includes a 2-layer apparatus and a set of entities configured in order to satisfy a particular service quality. For example, the bearer may include a PDCP entity (header compression/decompression apparatus, ciphering/deciphering apparatus, etc.), a MAC entity, and an RLC entity. The ENB determines configuration information of the entities and transmits a control message containing the determined configuration information to the UE. Therefore, the UE sets the radio bearer by referring to the configuration information.

In step 1110, the UE acquires information of the resource allocation period and the resource allocation period determination standards from the ENB. For example, the UE may acquire, from the ENB, information that resource allocation period #1 is 20 msec and resource allocation period #2 is 160 msec, together with the packet size as the period allocation determination standard. Otherwise, the UE may acquire, from the ENB, the number of persistent resource blocks and the modulation scheme as the period allocation determination standard.

In step 1115, the UE monitors the grant channel until the persistent resource information is received.

When the persistent resource information is received in step 1120, the UE performs HARQ reception for the signal received through the allocated persistent resource in step 1125. During this process, the UE acquires information for use in determining the resource allocation period. For example, the UE may acquire the size of the transmitted packet or the number of allocated persistent resource blocks and the modulation scheme.

Then, in step 1130, the UE determines the resource allocation period of the persistent resource from the information. That is, the UE determines the resource allocation period as 160 msec when the packet size is less than a reference value and as 20 msec when the packet size is greater than the reference value. Otherwise, the UE determines the resource allocation period as 160 msec when the number of persistent resource blocks and the modulation scheme coincide with pre-signaled values and as 20 msec when they do not coincide with the pre-signaled values.

In step 1135, the UE determines a point in time after the passage of the determined resource allocation period from the time point for allocation of the current persistent resource as a time point for allocation of a next persistent resource.

In step 1140, the UE determines if there is new signaling of parameters in relation to the resource allocation period before the determined time point for allocation of a next persistent resource. When there is a new signaling, the UE derives the resource allocation period by using the parameters and determines if there is any change in the resource allocation period.

When the resource allocation period derived from the newly signaled persistent resource and modulation scheme is different from the previous resource allocation period, which implies that a result of the determination in step 1140 is "YES," the UE proceeds to step 1150. When a result of the determination in step 1140 is "NO," the UE proceeds to step 1160.

In step 1150, the UE performs HARQ reception for the packet received through the newly allocated persistent resource. Then, in step 1155, the UE updates the resource allocation interval to a new value based on the newly allocated persistent resource, and then proceeds to step 1135, in which the UE calculates a next resource allocation time point by using the updated resource allocation interval.

In step 1160, the UE performs HARQ reception for the packet received through the persistent resource and then proceeds to step 1135, in which the UE calculates a next resource allocation time point.

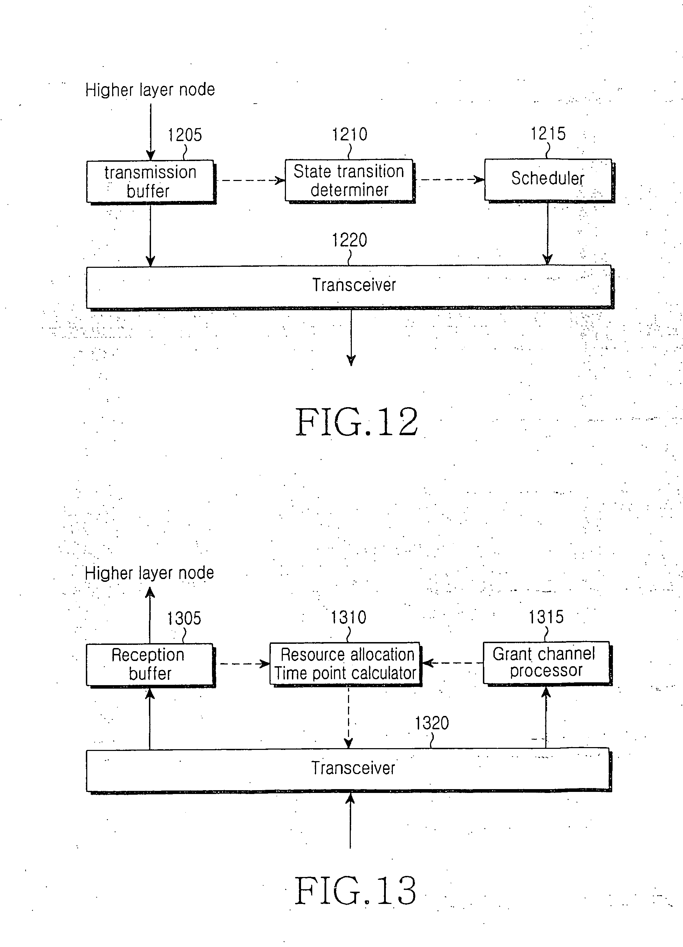

FIG 12 is a block diagram illustrating a structure of a scheduling apparatus according to the present invention.

Referring to FIG. 12, the scheduling apparatus includes a transmission buffer 1205, a state transition determiner 1210, a scheduler 1215, and a transceiver 1220.

The VoIP packet transmitted from a higher node is stored in the transmission buffer 1205, and the state transition determiner 1210 identifies the size of the VoIP packet stored in the transmission buffer 1205 in order to determine if the state of the VoIP session is a transient state, a talkspurt state, or a silent state.

Further, when the state of the current VoIP session is different from the state of the previous VoIP session, the state transition determiner 1210 signals the size of the required resource and the resource allocation period according to the new state to the scheduler 1215.

Upon receiving the signaling of the size of the required resource and the resource allocation period from the state transition determiner 1210, the scheduler 1215 allocates a proper persistent resource to the UE. The persistent resource allocation information is transmitted through the grant channel. The persistent resource allocation information includes allocation period information of the persistent resource. The allocation period information indicates that a resource allocation period of 20 msec is used in the talkspurt state or the transient state and a resource allocation period of 160 msec is used in the silent state.

The transceiver 1220 transmits the packet from the higher layer to the UE through the allocated OFDM resource.

FIG. 13 is a block diagram illustrating a receiving apparatus according to the present invention.

Referring to FIG. 13, the receiving apparatus includes a reception buffer 1305, a resource allocation time point calculator 1310, a grant channel processor 1315, and a transceiver 1320.

Based on the size of the VoIP packet arriving at the reception buffer 1305 or based on the resource allocation period information received through the grant channel, the resource allocation time point calculator 1310 recognizes the resource allocation period of a corresponding point in time and calculates the resource allocation time point from the recognized resource allocation period.

At the resource allocation time point, the resource allocation time point calculator 1310 commands the transceiver 1320 to receive the VoIP packet through the persistent resource.

The grant channel processor 1315 receives the grant channel transmitted from the scheduling apparatus and transmits the persistent resource allocation information to the resource allocation time point calculator 1310. That is, the grant channel processor 1315 determines, based on the allocation duration field value or the resource allocation period information included in the grant channel, if the resource allocation period of the persistent resource is 20 msec or 160 msec, and then transmits the determined period to the resource allocation time point calculator 1310.

The reception buffer 1305 stores the VoIP packet from the transceiver 1320 before transmitting it to a higher layer.

### 3^{rd} Embodiment

The third embodiment of the present invention provides an apparatus and a method for individually allocating, changing, or releasing a plurality of persistent resources allocated to a single UE.

As described above, the present invention proposes a scheme of allocating a persistent resource to a service having a relatively constant packet size and a relatively constant packet generation period, thereby reducing the overhead during the resource allocation process. The VoIP service is the most representative example of such a service, and interactive gaming, video telephony, etc., can be enumerated as other examples thereof. Since there are various types of services having advantages through allocation of the persistent resource as described above, it is impossible to completely disregard a case where multiple services are simultaneously used by one UE and multiple persistent resources are allocated to the UE.

It is necessary to be possible to allocate, change, or release the persistent resource through the grant channel. Further, when information of changing or releasing a persistent resource is transmitted to a UE allocated multiple persistent resources, the UE must be able to identify the persistent resource to which the transmitted information relates.

According to the present invention, when a persistent resource is allocated through a grant channel, a "persistent resource identifier" of the persistent resource is signaled together with the resource, so that the persistent resource identifier is inserted in a future signal relating to the persistent resource, so as to indicate which persistent resource the signal relates to.

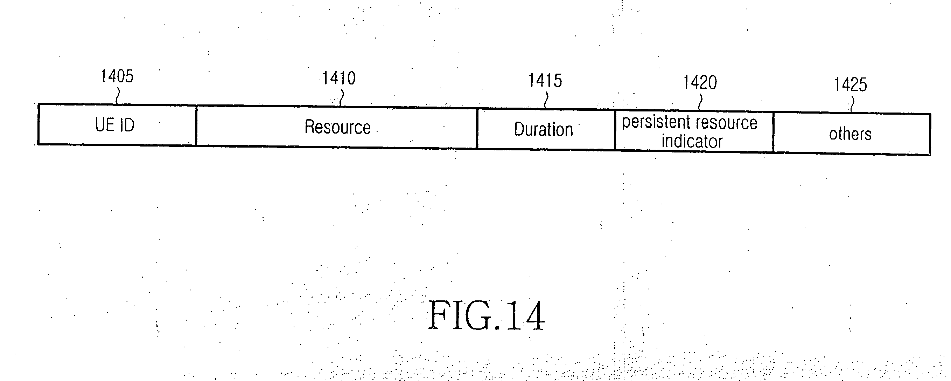

The present invention proposes simultaneous transmission of the persistent resource identifier and the scheduling information as shown in FIG. 14, which illustrates a structure of a message including a persistent resource identifier newly defined according to the third embodiment of the present invention.

Referring to FIG. 14, the resource allocation information transmitted through the grant channel includes a UE identifier 1405, a resource information 1410, and an allocation duration 1415. The UE identifier 1405 indicates an identifier of the UE to be allocated the resource, and the resource information 1410 includes a logical identifier of the resource to be allocated. The logical identifier may be included in information to be transmitted, such as a CRC.

As described above, from the resource allocation duration 1415, the ENB can indicate if the allocated resource is a persistent resource or a typical resource.

Further, the resource allocation information 1410 includes various other information as well as the resource allocation information, such as HARQ identifier or Multiple Input Multiple Output (MIMO). The information, such as HARQ identifier or MIMO, is unnecessary in allocating a persistent resource, but it can be used when the persistent resource identifier 1420 is transmitted by using a part of the other information 1425.

For example, a field indicating an HARQ identifier in typical resource allocation information may be used in order to identify a persistent resource identifier in the persistent resource allocation information. The UE analyzes the allocation duration 1415, so as to determine if the resource allocation information is typical resource allocation information or persistent resource allocation information.

When the resource allocation information is persistent resource allocation information, the UE determines a predetermined field, such as an HARQ identifier field, as a persistent resource identifier field.

The persistent resource identifier field 1420 is included in the information when a persistent resource is allocated through the resource allocation information. Therefore, when the persistent resource is released or changed thereafter, the same identifier is used to identify the persistent resource to be released or changed.

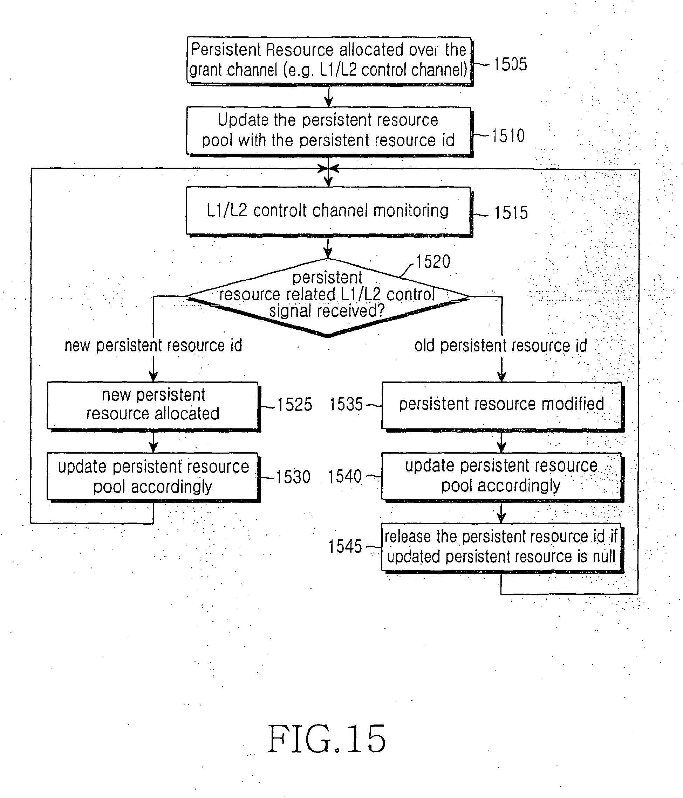

FIG. 15 is a flow diagram illustrating an operation of a communication apparatus according to the third embodiment of the present invention, in which a UE is employed as an example of the communication apparatus.

In step 1505, the UE is allocated a persistent resource through the grant channel. The grant channel can be an L1/L2 control channel, which will be used hereinafter.

In step 1510, the UE registers the allocated persistent resource in a persistent resource pool and uses the persistent resource in the packet transmission/reception.

The persistent resource pool is a database including information as shown in Table 2 below.

**Table 2**

| Persistent Resource ID | Persistent Resource | Allocation Pattern |
|---|---|---|
| 0 | R2 ∼ R4 | Pattern 1 |
| 1 | R6 | Pattern 1 |
| 2 | R11 | Pattern 2 |

Allocation of a persistent resource implies that a right to use a predetermined resource is granted to a predetermined UE without separate signaling at every predetermined point in time. The allocation pattern refers to information on the a point in time at which the persistent resource can be used. The allocation pattern can be expressed as, for example, a period or a set of periods.

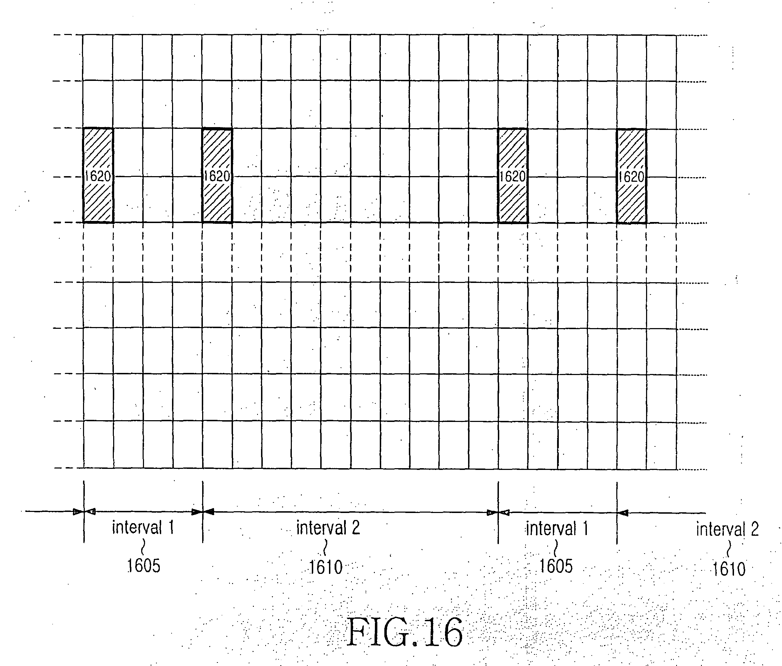

Now, a brief description will be given about FIG. 16, which illustrates a relation between the period and the resource allocation pattern according to the present invention. For example, the persistently allocated resource 1620 may be repeatedly allocated to the UE according to predetermined period #1 1605 and predetermined period #2 1610. In this case, the allocation patterns include information on period #1 and period #2.

In step 1515, the UE continuously monitors the L1/L2 control channel. In step 1520, the UE having received the resource allocation information in relation to the persistent resource allocation through the channel examines the persistent resource identifier of the resource allocation information. The UE determines if the identifier is an identifier of a new persistent resource or an identifier of the currently used persistent resource. The UE proceeds to step 1525 when the identifier is an identifier of a new persistent resource, and proceeds to step 1535 when the identifier is an identifier of the currently used persistent resource.

In step 1525, the UE recognizes from the identifier that the resource included in the resource allocation information is allocated as a new persistent resource, and uses the new persistent resource as well as the existing persistent resource in packet transmission/reception. The UE registers the new persistent resource in the persistent resource pool in step 1530, and then returns to step 1515, in which the UE monitors the L1/L2 control channel.

In step 1535, the UE replaces the persistent resource having the same identifier as the persistent resource identifier included in the resource allocation information with a resource included in the newly received resource allocation information.

In step 1540, the UE updates the persistent resource pool with the changed persistent resource.

In step 1545, if the replacement of the persistent resource performed in step 1535 is actually a release of the persistent resource, that is, if the resource information in the resource allocation information indicates "No resource," the UE recognizes that the corresponding persistent resource will not be used anymore, and releases the allocated resource. Thereafter, the UE returns to step 1515, in which it monitors the L1/L2 control channel.

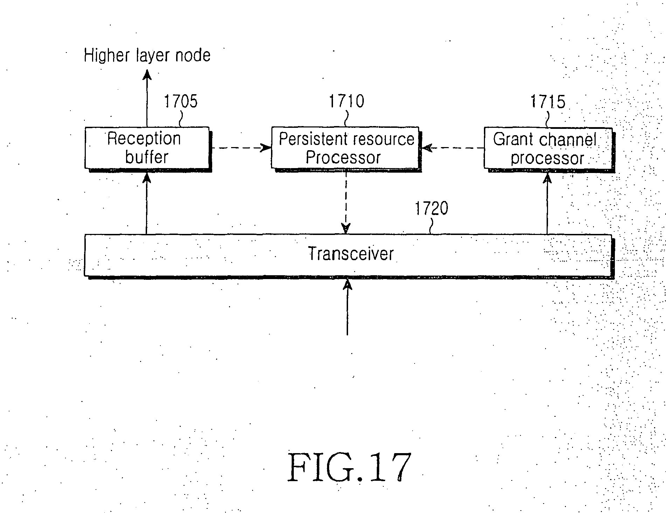

FIG. 17 is a block diagram of a communication apparatus according to the third embodiment of the present invention.

Referring to FIG. 17, the communication apparatus includes a reception buffer 1705, a persistent resource processor 1710, a grant channel processor 1715, and a transceiver 1720.

The persistent resource processor 1710 receives resource allocation information in relation to a persistent resource from the grant channel processor 1715 and manages a persistent resource pool. The persistent resource pool has parameters including persistent resource identifiers and allocation patterns and is managed in the form of a database. At a predetermined resource allocation time point of a persistent resource, the persistent resource processor 1710 controls the transceiver 1720 to receive a packet through the corresponding persistent resource.

The grant channel processor 1715 receives the grant channel transmitted from the ENB and transmits the persistent resource allocation information to the persistent resource processor 1710. That is, the grant channel processor 1715 identifies the allocation pattern corresponding to the identifier of the persistent resource and transmits the identified allocation pattern to the persistent resource processor 1710.

The reception buffer 1705 stores the VoIP packet from the transceiver 1720 before transmitting it to a higher layer.

According to the third embodiment of the present invention as described above, the change in the allocation state of the persistent resource is recognized through the L1/L2 control channel, and the allocation pattern corresponding to the identifier of the persistent resource is taken into consideration in receiving the packets. Therefore, it is possible to use the persistent resource without separate signaling.

While the invention has been shown and described with reference to certain exemplary embodiments thereof, it will be understood by those skilled in the art that various changes in form and details may be made therein without departing from the spirit and scope of the invention as defined by the appended claims.

## Claims

1. A method for receiving a persistent resource allocated from a Node B by a communication apparatus in a mobile communication system supporting a packet service, the method comprising the steps of:
acquiring scheduling information including an allocation period of a persistent resource corresponding to a predetermined packet state during a process of a call setup between the communication apparatus and the Node B;
receiving an allocation period and a size of a persistent resource to be allocated based on the packet state; and
receiving a packet through the allocated persistent resource.

2. The method of claim 1, further comprising monitoring a control channel after a passage of a predetermined time, and receiving the persistent resource by using a changed resource allocation interval when there is change in at least one the persistent resource and the resource allocation interval.

3. The method of claim 1, wherein the scheduling information further includes configuration information of apparatuses for the packet service and information on the persistent resource.

4. The method of claim 1, wherein the packet state comprises a transient state, a talkspurt state, and a silent state.

5. The method of claim 1, wherein the allocation period of the persistent resource is determined by a used codec mode.

6. A method for receiving a persistent resource allocated from a Node B by a communication apparatus in a mobile communication system supporting a packet service, the method comprising the steps of:
acquiring scheduling information including allocation period determination information of a persistent resource corresponding to a predetermined packet state during a process of a call setup between the communication apparatus and the Node B;
receiving the allocated persistent resource through a control channel;
acquiring the allocation period determination information from the allocated persistent resource and identifying the resource allocation period from the acquired allocation period determination information; and
receiving a packet through the persistent resource allocated by using the resource allocation period.

7. The method of claim 6, wherein the allocation period determination information includes a size of a voice packet transmitted through the allocated persistent resource.

8. The method of claim 6, wherein the allocation period determination information includes a number of allocated resource blocks and a modulation scheme.

9. The method of claim 6, wherein, in the step of identifying the resource allocation period, a number of blocks of the persistent resource and a modulation scheme are identified.

10. The method of claim 6, further comprising identifying an update of the resource allocation period by comparing a previous resource allocation period with a current persistent resource allocation period.

11. A method for receiving a persistent resource allocated from a Node B by a communication apparatus in a mobile communication system supporting a packet service, the method comprising the steps of:
receiving a control channel, which includes an identifier for identifying a predetermined persistent resource and an allocated persistent resource area and an allocation pattern corresponding to the identifier;
receiving the control channel at a predetermined point in time; and
identifying a changed persistent resource by identifying the identifier in the received control channel, and managing the persistent resource.

12. The method of claim 11, further comprising transmitting/receiving a packet through an allocated persistent resource corresponding to the identifier.

13. A scheduling apparatus of a Node B allocating a persistent resource in a mobile communication system, the scheduling apparatus comprising:
a determiner for identifying a state and a state transition of a packet by identifying a size of the packet received from a higher layer node; and
a scheduler for determining and notifying a transmission resource with a different size corresponding to the identified state of the packet and a resource allocation period corresponding to the transmission resource.

14. A communication apparatus for receiving an allocated persistent resource in a mobile communication system, the communication apparatus comprising:
a channel processor for receiving a control channel and acquiring a resource allocation period having a variable length corresponding to a size of a predetermined packet from the control channel;
a calculator for calculating a resource allocation start point based on the acquired resource allocation period; and
a receiver for receiving a packet transmitted through a persistent resource at a resource allocation period from the resource allocation start point.
